# EUROPEAN PATENT APPLICATION

(11) **EP 1 505 802 A1**
(43) Date of publication of application: **09.02.2005**
(21) Application number: 03017792.7
(22) Date of filing: 04.08.2003
(51) Int. Cl.: H04M 1/05

(54) **Handheld device having an auto-volume control means for earphone plugging and controlling method thereof**

(71) Applicant: High Tech Computer Corp., Tao Yuan (TW)
(72) Inventor: Han, Tom, Tao Yuan (TW); Teng, Jason, Tao Yuan (TW); Lee, Chc, Tao Yuan (TW); Lan, Eddie, Tao Yuan (TW)
(74) Representative: Becker Kurig Straus

(57) **Abstract**

A handheld device having an auto-volume control means for earphone plugging and the controlling method thereof is provided. A first preset volume value and a second preset volume value are set by a user to adjust the volume of an earphone and a speaker separately. Since output volume to the earphone and the speaker is under separate control, there is no need to readjust volume when the earphone is plugged in or unplugged. In addition, an over-volume protection and earphone volume micro-adjustment function are also incorporated to improve operation.

## Description

### BACKGROUND OF THE INVENTION

### Field of Invention

The present invention relates to a handheld device. More particularly, the present invention relates to a handheld device having an auto-volume control means for earphone plugging and controlling method thereof.

### Description of Related Art

Due to the rapid progress in electronic technologies, various handheld communicative or recording devices including personal digital assistants (PDA) and smart phones have been introduced. Furthermore, more functions have been added to these handheld devices to meet the user's demands. For example, most PDA or smart phones are equipped with an audio processing function so that users may listen to music anywhere they go.

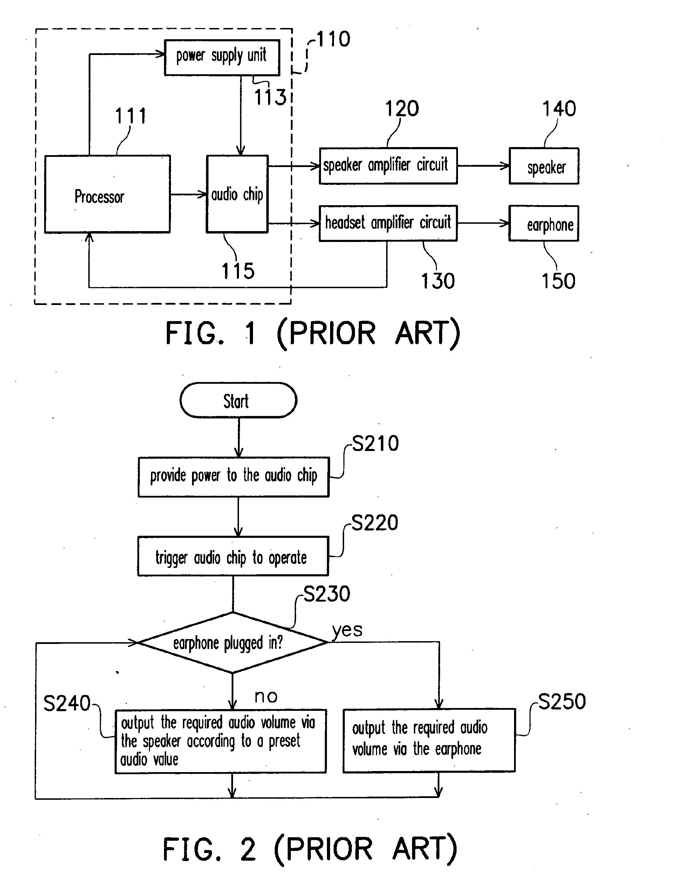

Fig. 1 is a block diagram showing an audio processing block within a conventional handheld device. The handheld device at least includes an audio processing unit 110, a speaker amplifier circuit 120 and a headset amplifier circuit 130. The audio processing unit 110 further includes a processor 111, an audio chip 115 and a power supply unit 113.

As shown in Fig. 1, the processor 111 executes conventional audio programs so that music is played out via the speaker 140 or the earphone 150 according to the user's selection. Fig. 2 is a flow chart showing the steps needed to execute a conventional audio program. First, as the audio program is enabled, the processor 111 signals to the power supply unit 113 to provide the necessary power to the audio chip 115 (S210). In the meantime, the processor 111 also triggers the operation of the audio chip 115 (S220) so that digital data from the processor 111 can be processed by the audio chip 115 and then be retransmitted to appropriate destination. The transmission pathway is determined by the plugging state of the earphone (S230). In other words, if the earphone is plugged into the earphone jack, the audio is output from the earphone 150 through the headset amplifier circuit 130 (S250), and based on the user-defined volume. On the other hand, if the earphone is unplugged, the audio is output from the speaker 140 through the speaker amplifier circuit 120 (S240), and based on the user-defined volume.

Obviously, a control system using a single preset volume level for both the earphone and the speaker has the following disadvantages:
1. A user listening to music in private through the speaker of the handheld device may set the preset volume to a high level. When the user enters a public place, the user may plug in the earphone and listen to music before adjusting the volume level. As a result, the user may suddenly then hear an explosion of sound energy through the earphone, due to the prior high volume setting while using the speaker, which may injure the human ears.
2. Conversely, a user initially listening to music with the earphone may set the preset volume to a low level. When the user unplugs the earphone and tries to listen through the speaker, the user must readjust the volume before the music is heard again and set to a comfortable level.
3. Since the earphone and speaker both use the same preset volume level, separate micro-adjustment of the sound level of the earphone is impossible.

### SUMMARY OF THE INVENTION

Accordingly, one object of the present invention is to provide a handheld device having a separate earphone volume control and controlling method thereof. The handheld device has a separate preset volume control for the earphone and speaker so that there is no need to reset the volume after plugging or unplugging an earphone. In addition, over-volume protection and micro-adjustment of volume are also provided to a user listening through the earphone.

To achieve these and other advantages and in accordance with the purpose of the invention, as embodied and broadly described herein, the invention provides a handheld device with separate earphone volume control. The handheld device at least includes an audio processing unit, a headset amplifier circuit and a speaker amplifier circuit. The audio processing unit executes an audio program . The audio program determines whether an earphone is plugged in or not. If the earphone is plugged in, audio signals are output at a first preset volume level. On the other hand, if the earphone is unplugged, audio signals are output at a second preset volume level. The headset amplifier circuit is coupled to the audio processing unit for receiving audio signals at the first preset volume level, amplifying the audio signals and sending the amplified signals to the earphone to produce audio .
The speaker amplifier circuit is also coupled to the audio processing unit for receiving the audio signals at the second preset volume level, amplifying the audio signals and sending the amplified signals to the speaker to produce audio.

In the embodiment of this invention, the audio processing unit further includes a processor, an audio chip and a power supply unit. The processor executes the audio program . The processor also produces a first set of digital data according to the first volume preset value and a second set of digital data according to the second volume preset value. The audio chip is coupled to the processor for receiving the first set of digital data and the second set of digital data. By referring to the value inside a register within the audio chip, audio signals at a first volume level or audio signals at a second volume level are produced. The power supply unit is coupled to the processor and the audio chip. According to control signals from the processor, power to the audio chip is provided.

In one embodiment of this invention, after the audio program has detected the presence of a plugged earphone, the actual output volume according to the first volume preset value is checked to determine if it is higher than a maximum preset volume level. If the actual output volume is higher than the maximum preset volume level, the actual output audio level is adjusted to a level just below the maximum permissible level so that audio signals at the aforementioned first volume level are produced.

Also in the embodiment of this invention, when the audio program detects the presence of a plugged earphone, the first volume preset value previously set up by the user is used to adjust the earphone volume. In addition, the first volume preset value is also utilized to modulate the value in the register within the audio chip so that the earphone volume can be micro-adjusted. On the other hand, if the audio program detects the absence of an earphone, the second volume preset value previously set up by the user is used to adjust the volume of audio produced by the speaker.

In one embodiment of this invention, the handheld device is a personal digital assistant. In another embodiment of this invention, the handheld device is a smart phone.

This invention also provides a method of separately controlling the volume produced by an earphone plugged into a handheld device. The method includes the following steps. First, a program is used to check if an earphone is plugged into the handheld device. When an earphone is plugged to the handheld device, audio signals having a first volume level according to a first preset value are sent to the earphone. On the other hand, when the program detects no plugged earphone in the handheld device, audio signals having a second volume level according to a second preset value are sent to a speaker.

Furthermore, after detecting the presence of a plugged earphone in the handheld device, the actual output volume according to the first preset volume value is checked to determine if it is higher than a preset maximum volume. If the actual output volume exceeds the preset maximum volume, the actual output volume is downward adjusted to a level below the preset maximum volume so that audio signals at the first volume level are produced. The maximum volume is preferably set to about 70 decibels to prevent injuring the user's ears.

An output volume table obtained through prior measurements can be consulted to determine if the actual output volume at a first preset volume value is higher than a preset maximum volume. Furthermore, a user may set up both the first preset volume level and the second preset volume level.

In brief, this invention provides a handheld device having a separate earphone volume control. Through the adjustment of a first preset volume level and a second preset volume level, a user may set up the earphone and the speaker to produce audio at the desired volume level. Hence, there is no need to readjust the volume level whenever the earphone is plugged in or unplugged. Furthermore, an output volume table obtained through prior measurements can be consulted to determine if the actual output volume at a first preset volume value is higher than a preset maximum volume when the user is listening to audio through the earphone. Thus, an over-volume protection is also included in the earphone system. Additionally, by resetting the value in the register within the audio chip, micro-adjustment of earphone volume is also possible.

It is to be understood that both the foregoing general description and the following detailed description are exemplary, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,

Fig. 1 is a block diagram showing an audio processing block within a conventional handheld device.

Fig. 2 is a flow chart showing the steps needed to execute a conventional audio program .

Fig. 3 is a flow chart showing the steps carried out by an audio program according to the preferred embodiment of this invention.

Fig. 4 is a table listing out various handheld devices currently in the market and the handheld device according to the preferred embodiment of this invention.

Fig. 5 is a schematic diagram showing various components in an actual output volume measurement system according to the preferred embodiment of this invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

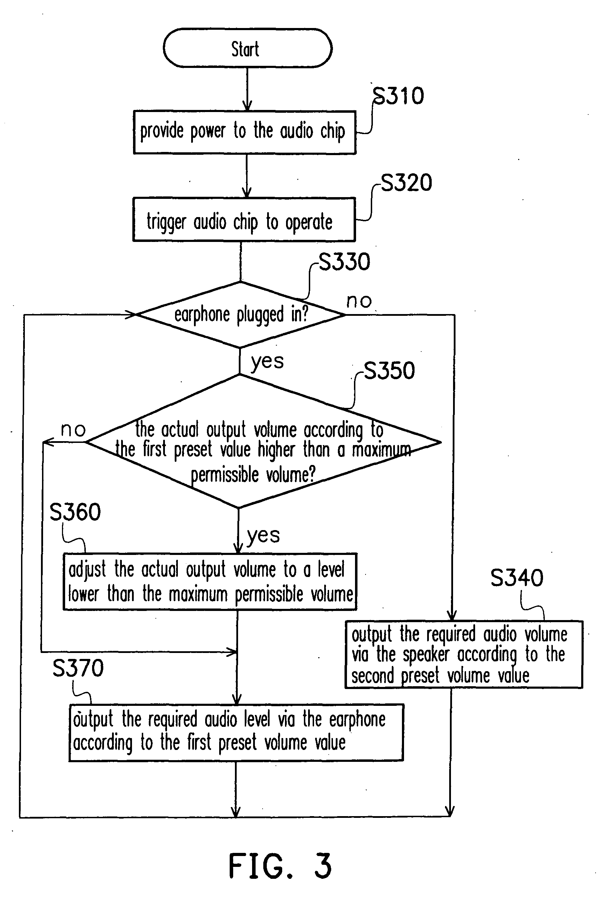

Fig. 3 is a flow chart showing the steps carried out by an audio program according to the preferred embodiment of this invention. The handheld device used in the illustration can either be a personal digital assistant (PDA) or a smart phone, for example. As shown in Figs. 1 and 3, the handheld device at least includes an audio processing unit 110, a speaker amplifier circuit 120 and a headset amplifier circuit 130. The audio processing unit 110 further includes a processor 111, an audio chip 115 and a power supply unit 113. To eliminate the need to reset audio volume every time the earphone is plugged in or unplugged and to provide over-volume protection and micro-adjustment of the earphone, the steps needed to operate the audio program are listed out in Fig. 3. The following is a description of the audio program with reference to both Figs. 1 and 3.

In Fig. 1, the processor 111 is the main component that executes every step of the audio program . According to the volume selection of the speaker 140 and the earphone 150 set up by the user, audio is played either through the speaker 140 or the earphone 150. First, after initializing the audio program, the processor 111 signals the power supply unit 113 to provide power to the audio chip 115 (S310). In the meantime, the processor 111 also triggers the audio chip 115 to begin operation (S320). Ultimately, the processor 111 is able to produce a first set of digital data and a second set of digital data to the audio chip 115 according to a first and a second preset volume value provided by the user. After picking up the first and the second set of digital data, the audio chip 115 processes the data and then re-transmits it to the headset amplifier circuit 130 or the speaker amplifier circuit 120.

Obviously, the signal transmission pathway from the audio chip 115 depends on the earphone's plug-in condition (S330). If no earphone is plugged into the handheld device, the processor 111 outputs the second set of digital data (without static sound, divided into 5 adjusting stages) according to the second preset volume value. The audio chip 115 picks up and processes the second set of digital data to produce audio signals at a second volume level. The speaker amplifier circuit 120 picks up the audio signal and transmits the signal to the speaker 140 to produce audio at the desired audio volume level (S340).

When the earphone is plugged into the handheld device, the processor 111 outputs the first set of digital data (without static sound, divided into 5 adjusting stages) according to the first preset volume value set by the user. The first set of digital data is transmitted to the audio chip 115. Inside the audio chip 115, the first set of digital data is referred to a user's setting so that the set value within the register (divided into 3 adjusting stages) representing the earphone's output volume is micro-adjusted. Hence, an audio signal at a first volume level (altogether divided into 5 x 3=15 adjusting stages) is produced. The headset amplifier circuit 130 picks up the audio signals and transmits the signals to the earphone 150 to produce audio at the desired audio volume level (S370).

To prevent the earphone from outputting a too loud volume and hence injuring the user's ears, the actual output volume according to the first volume preset value must first compare with a maximum permissible volume (S350) before signals are sent to the headset amplifier circuit 130 and then to the earphone 150 to produce audio according to the first preset volume level provided by the user (S370). The comparison between the actual output volume and the maximum permissible volume can be achieved by consulting an output volume table containing a list of actual measurements. If the actual volume output according to the output volume table is higher than the maximum permissible volume, the actual output volume is adjusted to a level below the maximum permissible volume (S360). The adjusted volume setting is then passed to the headset amplifier circuit 130 and then to the earphone 150 (S370) to produce audio at the correct audio level. Obviously, the over-volume protection function for trimming down the earphone volume is selectable on a demand basis by the user.

The conditions leading to inner ear injury may depend on volume of the sound and duration. For example, when a continuous sound is maintained at 85 dB, harm to the inner ear may start to occur. In general, for a pure tone at 1KHz, a sound level between 0dB∼ 20dB is regarded as silent, a sound level between 30dB ~ 40dB is regarded as weak, a sound level between 50dB ~ 70dB is regarded as normal, a sound level between 80 dB ~ 100dB is regarded as loud and a sound level between 11dB∼ 130dB is regarded as extremely loud. Hence, in this invention, the maximum volume is set to about 70dB if audio from the earphone must be controlled within the normal range.

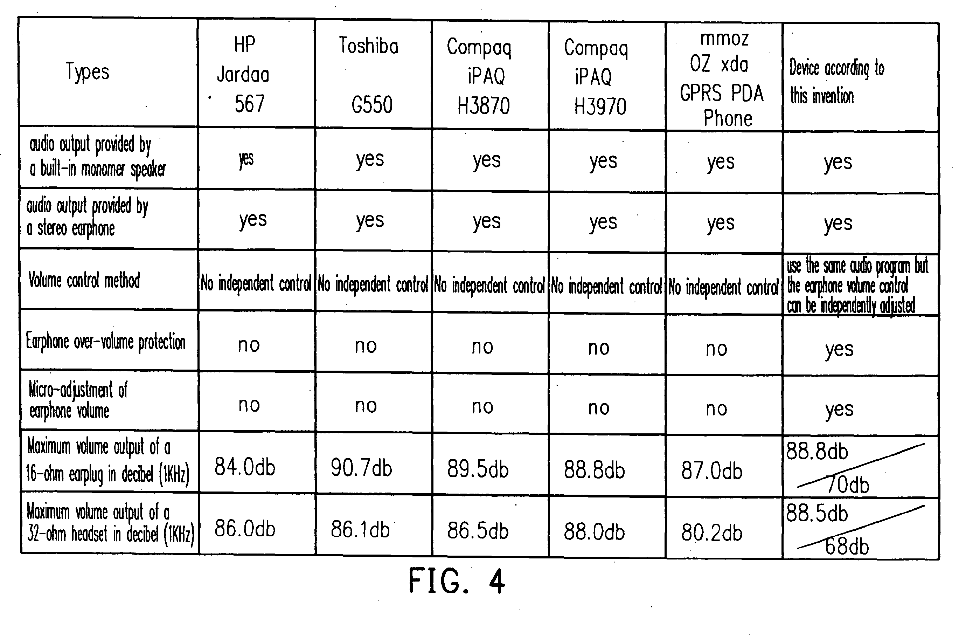

Fig. 4 is a table listing various handheld devices currently in the market and the handheld device according to the preferred embodiment of this invention. Although the handheld device, including HP's Jarnada 567, has separate speaker and earphone output, there is no separate output volume control, no over-volume protection nor earphone micro-adjust function provided. However, the handheld device of this invention not only includes a separate earphone volume control, but also offers earphone over-volume protection and earphone micro-adjust function.

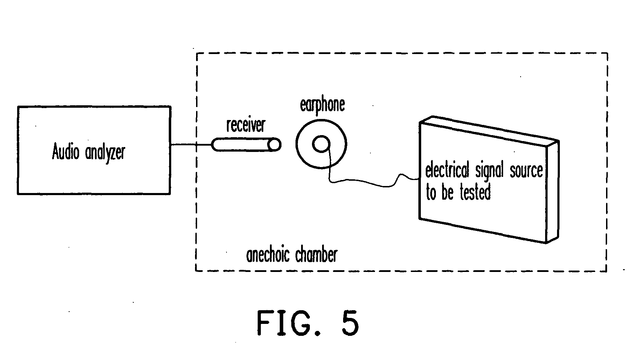

The last two rows in Fig. 4 list out the results when using the measuring system in Fig. 5 to measure the maximum output volume of the various handheld devices. In Fig. 4, a 16-ohm Panasonic RP-HVT12 stereo earplug and a 32-ohm Grado Labs SR80 stereo headset are plugged into various handheld devices. As shown in Fig. 4, all the handheld devices exceed 80 dB, even the device according to this invention before the earphone over-volume protection function is enabled. However, after setting the earphone over-volume protection in the handheld device of this invention, the Panasonic RP-HVT 12 has a maximum volume output of 70 dB while the Grado Labs SR80 has a maximum volume output of 68dB only.

In conclusion, the major aspects of this invention at least includes:
1. Volume level for the earphone and the speaker are independently controlled. Hence, plugging and unplugging the earphone requires no resetting of volume level.
2. When earphone volume is turned up to a too loud level, the earphone over-volume protection will automatically cut the volume to protect user's ears when the earphone is plugged.
3. An earphone micro-adjust function is also introduced so that earphone volume may be increased in 15 steps to facilitate the user.
4. No extra circuit cost is required for the introduction of all the aforementioned functions.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A handheld device with an auto-volume control means for earphone plugging, comprising:
an audio processing unit for executing an audio program, wherein the audio program is able to detect whether an earphone is plugged into the handheld device, if the earphone is plugged in, audio signals having a first volume according to a first preset volume value are output, and if no earphone is plugged in, audio signals having a second volume according to a second preset volume value is output;
a headset amplifier circuit coupled to the audio processing unit for receiving and amplifying the audio signals at the first volume level and then sending the amplified audio signals to the earphone for producing audio; and
a speaker amplifier circuit coupled to the audio processing unit for receiving and amplifying the audio signals at the second volume level and then sending the amplified audio signals to the speaker for producing audio.

2. The handheld device of claim 1, wherein after confirming that the earphone is plugged into the handheld device, the audio program determines whether the actual audio volume according to the first preset volume value is higher than a maximum permissible volume, and if the actual audio volume is higher than the maximum permissible volume, the actual output volume is adjusted to a level just under the maximum permissible volume so that audio signals at the first volume level is output.

3. The handheld device of claim 2, wherein the maximum permissible volume is set to a sound level of about 70dB.

4. The handheld device of claim 2, wherein an output volume table is consulted to determine if the actual output volume according to the first preset volume value is higher than the maximum permissible volume.

5. The handheld device of claim 1, wherein the audio processing unit includes:
a processor for executing the audio program, outputting a first set of digital data according to a first preset volume value and outputting a second set of digital data according to a second preset volume value;
an audio chip coupled to the processor for receiving the first set of digital data arid the second set of digital data, referencing the value inside a register and outputting audio signals at the first volume level and the second volume level; and
a power supply unit coupled to the processor and the audio chip for providing power to the audio chip when signaled by the processor.

6. The handheld device of claim 5, wherein after confirming that the earphone is plugged into the handheld device, the value inside the register can be set by the user.

7. The handheld device of claim 1, wherein the first preset volume value and the second preset volume value can be set by the user.

8. The handheld device of claim 1, wherein the handheld device is a personal digital assistant.

9. The handheld device of claim 1, wherein the handheld device is a smart phone.

10. A method of separately controlling earphone volume produced by a handheld device, comprising the steps of:
determining if an earphone is plugged into the handheld device,
if the earphone is plugged into the handheld device, outputting audio signals at a first volume level to the earphone according to a first preset volume value; and
if no earphone is plugged into the handheld device, outputting audio signals at a second volume level to a speaker according to a second preset volume value.

11. The method of claim 10, wherein after confirming the earphone is plugged into the handheld device, further includes the following steps:
determining if the actual output volume according to the first preset volume value is higher than a maximum permissible volume, and
if the actual output volume is higher than the maximum permissible volume, adjusting the actual output volume to a level below the maximum permissible volume and then outputting audio signals at the first volume level.

12. The method of claim 11, wherein the maximum permissible volume is set to a sound level of about 70dB.

13. The method of claim 11, wherein the step of determining if the actual output volume according to the first preset volume is higher than a maximum permissible volume includes consulting an output volume table.

14. The method of claim 10, wherein the first preset volume value and the second preset volume value can be set by a user.
